# EUROPEAN PATENT SPECIFICATION

(11) **EP 2 233 274 B1**
(45) Date of publication and mention of the grant of the patent: **01.02.2012**
(21) Application number: 10157231.1
(22) Date of filing: 22.03.2010
(51) Int. Cl.: B29C 51/26

(54) **Clamping frame for a thermoforming machine and thermoforming machine comprising the same**
Spannrahmen für Tiefziehmaschinen sowie Tiefziehmaschine
Cadre de fixation pour une machine de thermoformage et machine de thermoformage

(30) Priority: 23.03.2009 IT TO20090221
(43) Date of publication of application: 29.09.2010
(73) Proprietor: Parco S.r.L., 10044 Pianezza (TO) (IT)
(72) Inventor: Dal Cero, Pasqualino, 10040, Givoletto (Torino) (IT); Di Dio, Leonardo, 10124, Torino (IT)
(74) Representative: Rondano, Davide

(56) References cited:
- DE-C1- 19 814 615
- JP-A- 8 258 141
- JP-A- 63 256 421
- US-A- 4 637 789

## Description

The present invention refers to a clamping frame for a thermoforming machine, according to the preamble of the attached claim 1, see for example prior art document DE 198 14 615 C1.

One of the objects of the present invention is to provide an improved clamping frame, which is easy to use and at the same time has low production costs.

This and other objects are achieved by means of a clamping frame of the type specified above having the further characteristics set forth in the characterizing part of the attached claim 1.

Due to such characteristics, the clamping frame has an improved stiffness of the so-called thermoforming "widow", allowing a substantially uniform distribution of the pressure that the clamping frame exerts onto the periphery of the sheet to be thermoformed.

Advantageous embodiments of the clamping frame according to the invention form an object of the dependent claims, whose content is to be deemed as an integral and integrating part of the description that follows.

According to another aspect, the present invention refers to a thermoforming machine comprising a clamping frame of the type specified above.

Further characteristics and advantages of the present invention will be clear from the detailed description that follows, merely given for exemplifying and non-limiting purposes, with reference to the attached drawings, wherein:
- Figure 1 is a perspective view of a clamping frame according to a preferred embodiment of the present invention;,
- Figure 1a is a partial perspective view of the clamping frame of Figure 1, in which some components have been omitted;
- Figure 1b is a view analogous to that of Figure 1a, but in which further components of the clamping frame have been omitted;

- Figures 2 and 3 are partial perspective views of the assembly details of the clamping frame shown in the previous figures; and
- Figures 4 and 5 show a first and a second type of carriage elements applied to the clamping frame shown in the previous figures.

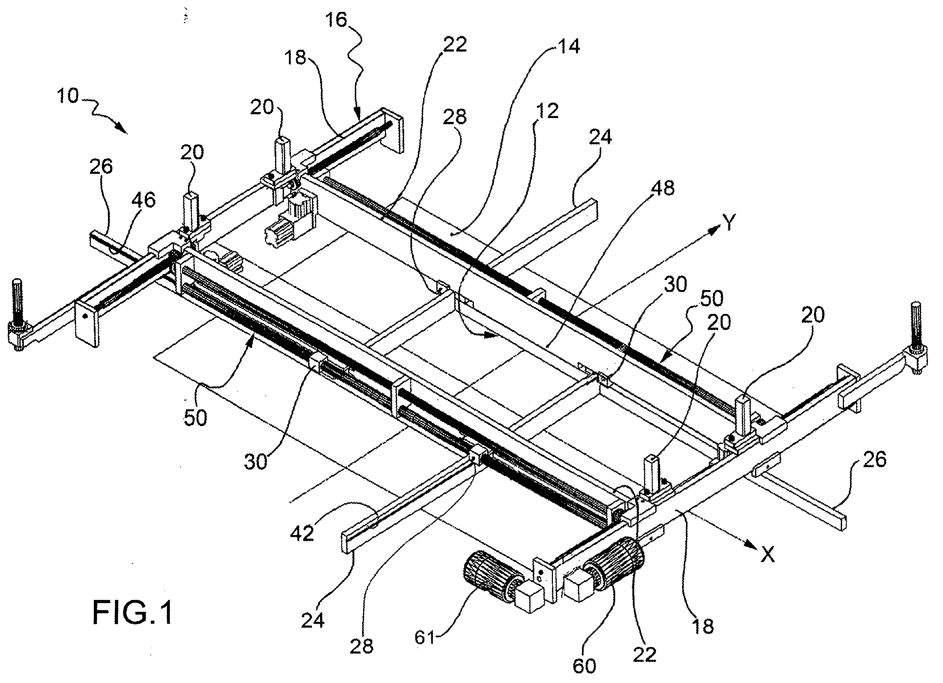

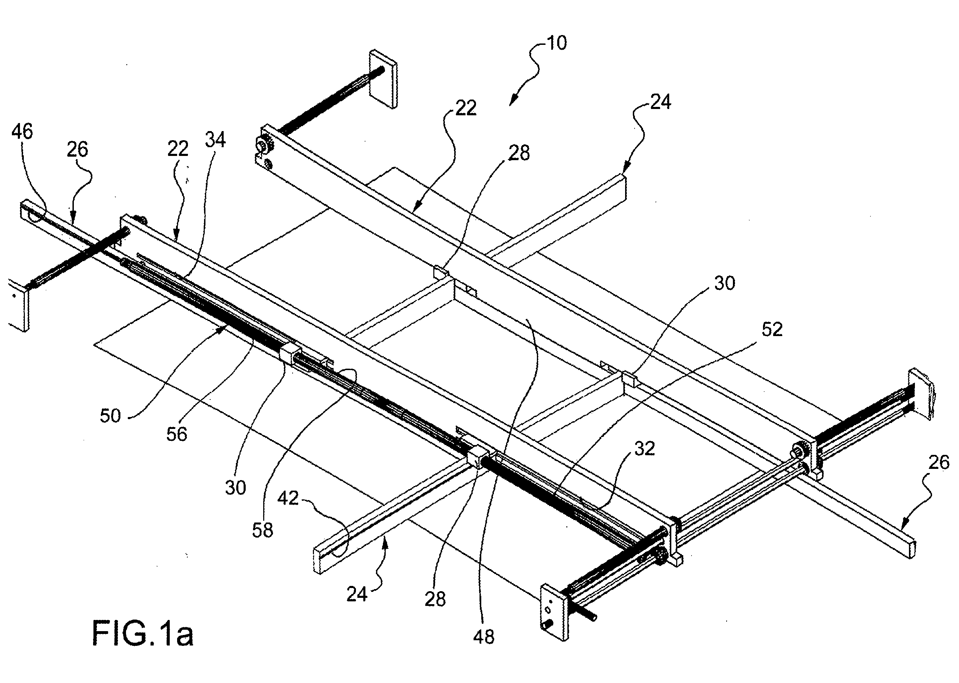

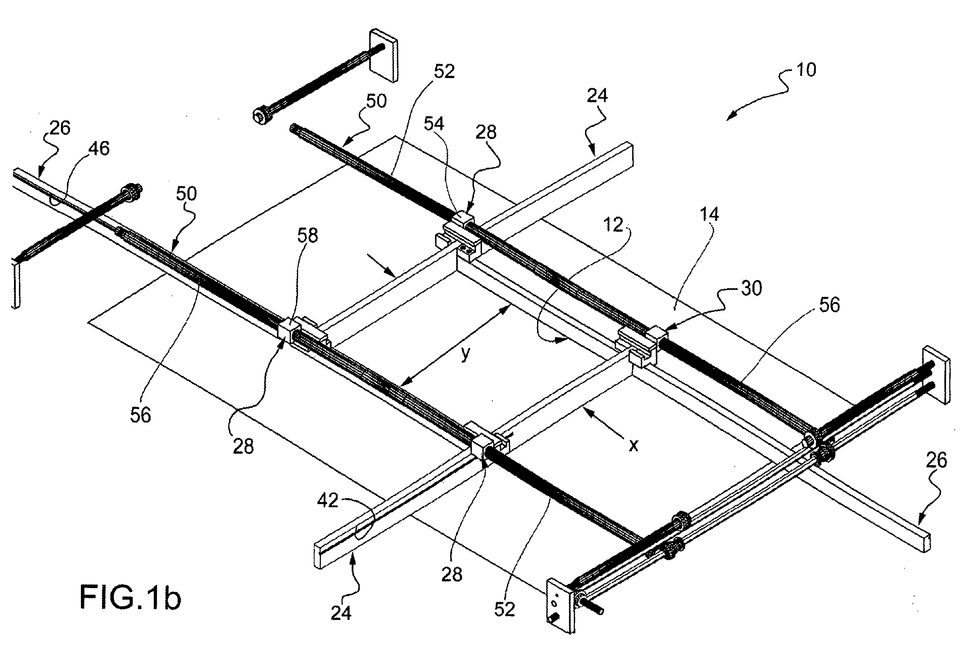

Referring in particular to Figures 1, 1 a and 1b, a clamping frame according to a preferred embodiment of the present invention is generally indicated 10.

In the present description and in the attached claims the adjectives "longitudinal" and "transverse" are respectively used to indicate elements and components substantially orientated parallel to a first axis or longitudinal direction X and to a second axis or transverse direction Y perpendicular to each other (see Figure 1).

The clamping frame 10 defines a quadrangular window 12 which has adjustable longitudinal and transverse dimensions and which is intended to hold the periphery of a preheated sheet 14 to be thermoformed on a mould arranged in a thermoforming machine (whose details are not illustrated). In a per-se-known manner, the sheet 14 is positioned on the mould and - by suctioning or pressure - it adapts to the mould adhering to the form of this latter.

As clarified in the following part of the present description, the clamping frame 10 has adjustable dimensions in the longitudinal direction X and in the transverse direction Y, in such a manner that it can be adapted to sheets 14 of different dimensions.

Optionally, the clamping frame 10 may be used in combination with a cover frame (not illustrated) described in European patent application EP 2 130 663 A1 owned by the same Applicant. In this manner, the perimetral region of the sheet 14 is clamped between the clamping frame 10 located above and the cover frame located below, which cover frame also has adjustable dimensions.

The clamping frame 10 comprises a support structure 16 intended to be connected to a vertical moving system of the thermoforming machine (whose details are not shown). In this manner, by virtue of the actuating members of the vertical moving system, the clamping frame 10 may be brought close to the mould, pushing and clamping the sheet 14 against the mould during the shaping operation.

The support structure 16 comprises a pair of transverse beams 18 intended to be mounted onto the abovementioned vertical moving system of the thermoforming machine so as to be drivingly connected to it, for example due to respective pairs of hoisting uprights 20 fixed onto each of the transverse beams 18.

Furthermore, the clamping frame 10 comprises a pair of longitudinal beams 22 which are mounted movably in a guided manner in the transverse direction Y with respect to the support structure 16 in one of the ways per-se-known to a man skilled in the art.

The clamping frame 10 further comprises a pair of transverse bars 24 and a pair of longitudinal bars 26 constrained to the longitudinal beams 22. The relative distance of the pair of transverse bars 24 and of the pair of longitudinal bars 26 respectively defines the longitudinal dimension x and the transverse dimension y of the window 12 (Figure 1b).

More specifically, slidably mounted at the bottom of each longitudinal beam 22 are, on the one hand, a first carriage element 28 and, on the other hand, a second carriage element 30. The clamping frame 10 is thus provided in total with a pair of first carriage elements 28 and a pair of second carriage elements 30.

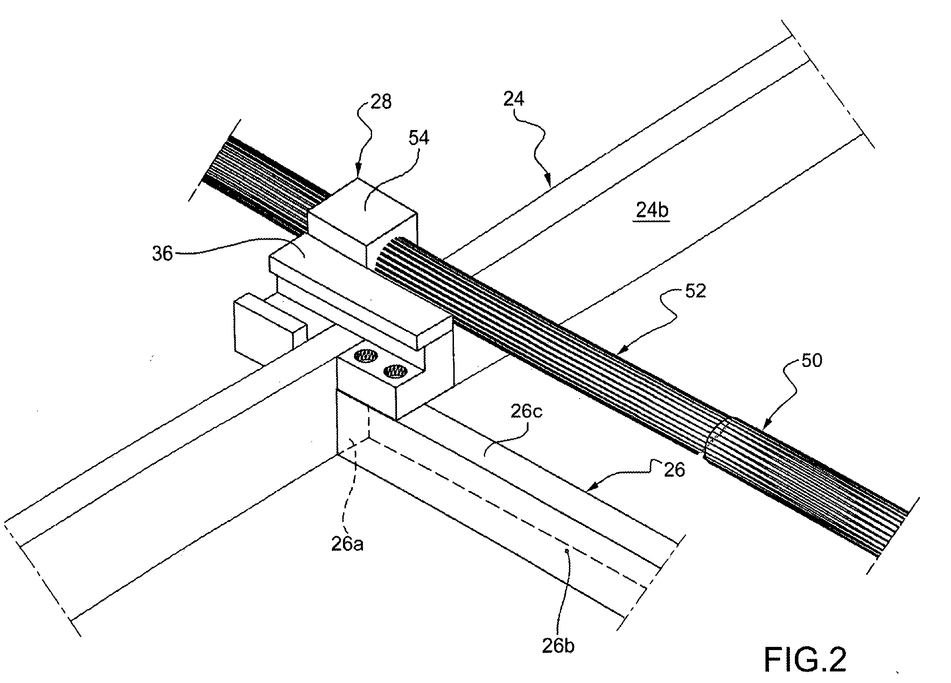

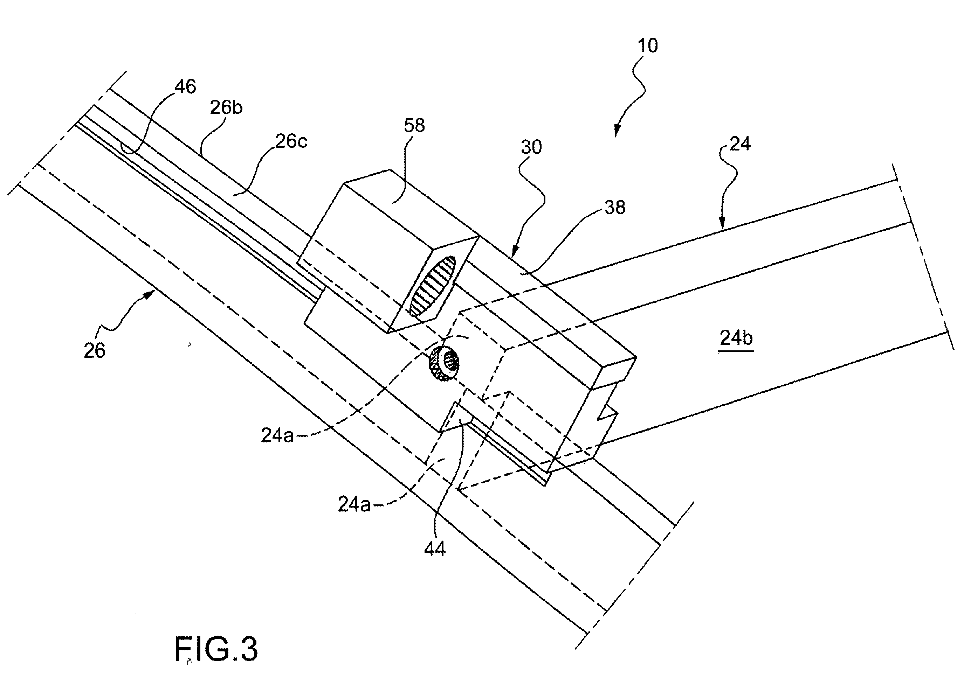

Referring in particular to Figures 2 and 3, the assembly of a first and second carriage element 28, 30 will be described now. It should be observed that the assembly of the four carriage elements 28 and 30 occurs in a symmetric manner with respect to the centre of the window 12, identified in Figure 1 by the intersection of the axe which define the longitudinal direction X and the longitudinal direction Y. For this reason, only the assembly of one of these first carriage elements 28 and one of these second carriage elements 30 will be described.

As observable in Figure 1a, preferably each of the longitudinal beams 22 has a first and a second longitudinal groove 32 and 34 (which are observable only on one of the beams 22) through which the first and the second carriage element 28 and 30 are slidably supported, respectively. More specifically, as observable in Figure 2, the first and the second carriage element 28 and 30 respectively comprise a first and a second slide portion 36, 38 which are accommodated in the longitudinal grooves 32 and 34, respectively, so as to be free to slide.

With reference in particular to Figure 2, an axial end 26a of an associated longitudinal bar 26 is fixed onto the first carriage element 28, by means of screws applied on the top and the first carriage element 28 is passed through by the previous transverse bar 24. The coupling of the associated longitudinal bar 26 and of the previous transverse bar 24 with the first carriage element 28 allows the lateral face 24b of the transverse bar 24 to slide against the axial end 26a of the longitudinal bar 26.

Preferably the first carriage element 28 has a first guide projection (not shown) which is engaged in a transverse guide groove 42 provided on the transverse bar 24 in a lateral face thereof opposite to the lateral face 24b sliding against the axial end 26a.

Referring in particular to Figure 3, an axial end 24a of an associated transverse bar 24 is fixed onto the second carriage element 30, by means of screws applied on the top and the second carriage element 30 is passed through by the longitudinal bar 26 associated to the first carriage element 28. The coupling of the associated transverse bar 24 and of the longitudinal bar 26 with the second carriage element 30 allows the lateral face 26b of the longitudinal bar 26 to slide against the axial end 24a of the transverse bar 24. Conveniently, as noticeable by observing Figure 3, a portion of the axial end 24a of the transverse bar 24 is mounted resting and freely sliding over the upper face 26c of the longitudinal bar 26. Due to this arrangement, the transmission of pressure on the longitudinal bars 26 through the second carriage elements 30 is improved.

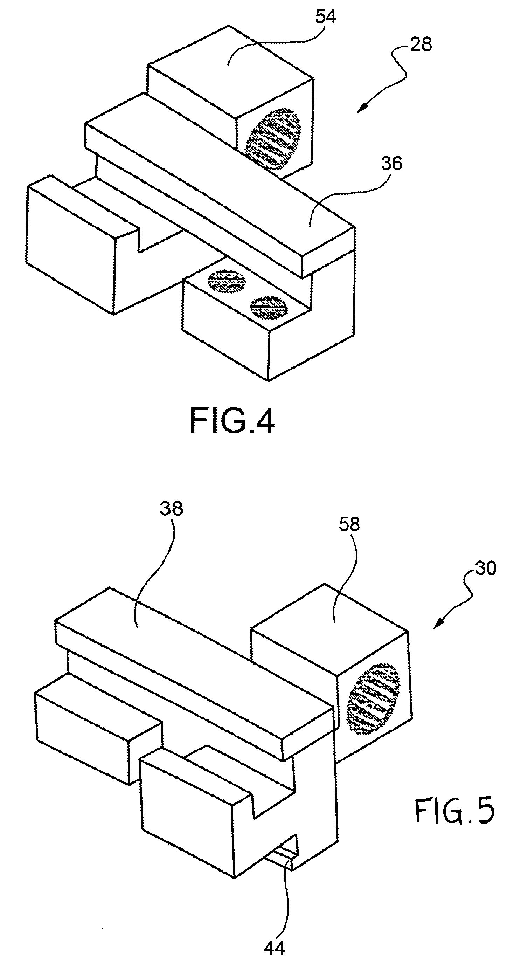

Preferably, as observable in Figure 5, the second carriage element 30 has a second guide projection 44 which is engaged in an associated longitudinal guide groove 46 provided on the longitudinal bar 26 in a lateral face thereof opposite to the lateral face 26b sliding against the axial end 24a.

Preferably, the illustrated longitudinal beam 22 comprises an intermediate section 48 projecting downwards and positioned between the first and the second carriage element 28, 30. The intermediate section 48 lies against the longitudinal bar 26 which passes through the second carriage element 30.

As can be noticed, advantageously the first and second carriage element 28, 30 substantially "surround" on the bottom (in particular with their respective longitudinally outer ends) the associated longitudinal beam 22 beneath which they slide.

Preferably, the first carriage element 28 and the second carriage element 30 are moved simultaneously towards and away from each other by means of a suitable actuation system.

Preferably, the actuation system comprises a threaded shaft 50 rotatably supported by the longitudinal beam 22 on which the first and second carriage element 28 and 30 are mounted.

On the one hand, the threaded shaft 50 has a first screw threading 52 (Figures 1a, 1b and 2) having a first direction and cooperating with a respective first female screw threading (not shown) provided in a first portion 54 which belongs to the first carriage element 28 (Figures 2 and 4) and which is positioned on the transversely outer side of the associated beam 22.

On the other hand, the threaded shaft 50 has a second screw threading 56 (Figures 1, 1a, 1b and 3) having a second direction and cooperating with a respective second female screw threading (not shown) provided in a second portion 58 which belongs to the second carriage element 30 (Figures 3 and 5) and which is positioned on the transversely outer side of the beam 22.

Preferably the threaded shaft 50 is rotated by a motor device fixed onto the support structure 16 in a per-se-known manner. Advantageously the motor device is an electric motor 60 of known type (Figure 1). The transmission of the motion generated by the motor device to the threaded shaft 50 occurs via mechanisms of per-se-known type in the field, such as for example bevel gears, lay shafts and splined shafts. Conveniently, the motor device is arranged to rotate simultaneously both the threaded shafts 50 associated to the longitudinal beam 22, in such a manner that the movement of the transverse bars 24 occurs in a balanced manner on the two sides of the longitudinal beams 22.

In summary, the sliding of the first and second carriage elements 28, 30 on the longitudinal beams 22 allows the movement of the transverse bars 24 in the longitudinal direction X. In this manner, the transverse bars 24 may be moved towards or away from each other to define the longitudinal dimension x (Figure 1b) of the window 12.

The freedom of movement in the transverse direction Y of the longitudinal beams 22 with respect to the bearing structure 16 allows the movement of the longitudinal bars 24. Thus these latter may be moved towards or away from each other to define the transverse dimension y (Figure 1b) of the window 12. Analogously, the movement of the longitudinal beams 22 along the transverse direction Y is optionally driven by an additional motor device, such as an electric motor 61 (Figure 1) of per-se-known type.

Obviously, the principle of the invention remaining unchanged, the embodiments and manufacturing details may widely vary with respect to those described and illustrated purely by way of non-limiting examples.

## Claims

1. Clamping frame (10) for a thermoforming machine, said frame (10) defining a quadrangular window (12) having adjustable dimensions and intended to hold the periphery of a sheet (14) of a material to be thermoformed, and comprising:
- a support structure (16) intended to be connected to a vertical moving system of said thermoforming machine;
- a pair of longitudinal beams (22) mounted so as to be movable in a guided manner in a transverse direction (Y) with respect to said support structure (16); and
- a pair of transverse bars (24) constrained to said longitudinal beams (22), and whose relative distance defines the longitudinal dimension (x) of said window (12);
said frame (10) being **characterised in that** it further comprises a pair of longitudinal bars (26) also constrained to said longitudinal beams (22), and whose relative distance defines the transverse dimension (y) of said window (12); wherein on the bottom of each longitudinal beam (22) are slidably mounted in the longitudinal direction:
on the one hand, a first carriage element (28) to which an axial end (26a) of an associated longitudinal bar (26) is fixed, and which is passed through by a previous transverse bar (24) in such a manner as to guide the lateral sliding thereof on said axial end (26a) of the longitudinal bar (26); and
on the other hand, a second carriage element (30) onto which an end (24a) of an associated transverse bar (24) is fixed, and which is passed through by the longitudinal bar (26) associated to said first carriage element (28) in such a manner as to guide the lateral sliding thereof on said axial end (24a) of the transverse bar (24);
said first and second carriage elements (28, 30) allowing the movement of the transverse bars (24) in the longitudinal direction (X).

2. Frame according to claim 1, wherein each longitudinal beam (22) has a first and a second longitudinal groove (32, 34) through which said first and second carriage elements (28, 30), respectively, are.slidably supported.

3. Frame according to claim 1 or claim 2, wherein each transverse bar (24) and each longitudinal bar (26) have a transverse guide groove (42) and a longitudinal guide groove (46), respectively, cooperating with a first guide projection (40) and with a second guide projection (44), respectively, which protrude from the first carriage element (28) and from the second carriage element (30) respectively passed through by said transverse bar (24) and said longitudinal bar (26), respectively.

4. Frame according to any one of the preceding claims, wherein each longitudinal beam (22) comprises, between the two carriage elements (28, 30), an intermediate section (48) protruding downwards and rasting against the longitudinal bar (26) which passes through the respective second carriage element (30).

5. Frame according to any one of the preceding claims, wherein said first and second carriage elements (28, 30) are simultaneously operated by actuating means (50) to move towards and away from each other.

6. Frame according to claim 5, wherein said actuating means comprise a threaded shaft (50) which is rotatably supported by the longitudinal beam (22) on which said first and second carriage elements (28, 30) are mounted, and which, on opposite sides, has a first and a second screw threading (52, 45) provided on opposite directions and cooperating with a first and a second complementary female screw respectively, which are provided in said first and said second carriage element (28, 30), respectively.

7. Frame according to claim 6, wherein said threaded shaft (50) is rotated by means of motor means (60).

8. Frame according to claim 7, wherein said motor means comprise an electric motor (60).

9. Frame according to claim 8, wherein said motor means (60) are fixed to said support structure (16).

10. Thermoforming machine comprising a clamping frame (10) according to any one of the preceding claims.

## Patentansprüche

1. Spannrahmen (10) für eine Thermoformmaschine, wobei der Rahmen (10) ein viereckiges Fenster (12) festlegt, dessen Abmessungen eingestellt werden können, wobei das Fenster dazu vorgesehen ist, um den Umfang einer Folie (14) eines Materials zu halten, das einem Thermoformvorgang unterworfen werden soll, wobei der Rahmen (10) umfasst:
- eine Tragstruktur (16), die dazu vorgesehen ist, um mit einem vertikalen Bewegungssystem der Thermoformmaschine verbunden zu werden;
- ein Paar von Längsbalken (22), die so angebracht sind, dass sie in einer Querrichtung (Y) zur Tragstruktur (16) geführt bewegt werden können; sowie
- ein Paar von Querstangen (24), die an den Längsbalken (22) eingespannt sind, wobei ihr relativer Abstand die Längsabmessung (x) des Fensters (12) festlegt;
wobei der Rahmen (10) **dadurch gekennzeichnet ist, dass** er weiters ein Paar von Längsstangen (26) umfasst, die gleichfalls an den Längsbalken (22) eingespannt sind, wobei ihr relativer Abstand die Querabmessung (y) des Fensters (12) festlegt, wobei am Boden eines jeden Längsbalkens (22) in Längsrichtung verschiebbar angebracht sind:
einerseits ein erstes Schlittenelement (28), an dem ein axiales Ende (26a) einer zugeordneten Längsstange (26) befestigt ist, wobei es von einer vorherigen Querstange (24) so durchlaufen wird, dass das seitliche Verschieben auf dem axialen Ende (26a) der Längsstange (26) geführt wird; und
andererseits ein zweites Schlittenelement (30), auf dem ein Ende (24a) einer zugeordneten Querstange (24) befestigt ist, wobei es von der Längsstange (26), die dem ersten Schlittenelement (28) zugeordnet ist, so durchlaufen wird, dass das seitliche Verschieben auf dem axialen Ende (24a) der Querstange (24) geführt wird;
wobei das erste und das zweite Schlittenelement (28, 30) die Bewegung der Querstangen (24) in der Längsrichtung (X) ermöglichen.

2. Rahmen gemäß Anspruch 1, wobei jeder Längsbalken (22) eine erste sowie eine zweite Längsrille (32, 34) besitzt, in denen das erste bzw. das zweite Schlittenelement (28, 30) verschiebbar aufgenommen werden.

3. Rahmen gemäß Anspruch 1 oder Anspruch 2, wobei jede Querstange (24) und jede Längsstange (26) eine in Querrichtung verlaufende Führungsrille (42) bzw. eine in Längsrichtung verlaufende Führungsrille (46) besitzen, die mit einem ersten Führungsansatz (40) bzw. mit einem zweiten Führungsansatz (44) zusammenwirken, die vom ersten Schlittenelement (28) bzw. vom zweiten Schlittenelement (30) aufragen, die von der Querstange (24) bzw. von der Längsstange (26) durchlaufen werden.

4. Rahmen gemäß irgendeinem der bisherigen Ansprüche, wobei jeder Längsbalken (22) zwischen den beiden Schlittenelementen (28, 30) einen Zwischenteil (48) umfasst, der nach unten vorspringt und auf der Längsstange (26) aufliegt, die das entsprechende zweite Schlittenelement (30) durchläuft.

5. Rahmen gemäß irgendeinem der bisherigen Ansprüche, wobei das erste und das zweite Schlittenelement (28, 30) von einer Betätigungseinrichtung (50) gleichzeitig so betätigt werden, dass sie sich aufeinander zu und voneinander weg bewegen.

6. Rahmen gemäß Anspruch 5, wobei die Betätigungseinrichtung eine Gewindewelle (50) umfasst, die im Längsbalken (22) drehbar gelagert ist, auf dem das erste und das zweite Schlittenelement (28, 30) befestigt sind, wobei sie an gegenüberliegenden Seiten ein erstes und ein zweites Schraubengewinde (52, 45) besitzt, die gegenläufig vorgesehen sind und mit einem ersten bzw. mit einem zweiten Muttergewinde zusammenwirken, die im ersten bzw. im zweiten Schlittenelement (28, 30) vorgesehen sind.

7. Rahmen gemäß Anspruch 6, wobei die Gewindewelle (50) mit einer Motoreinrichtung (60) in Drehung versetzt wird.

8. Rahmen gemäß Anspruch 7, wobei die Motoreinrichtung einen Elektromotor (60) umfasst.

9. Rahmen gemäß Anspruch 8, wobei die Motoreinrichtung (60) an der Tragstruktur (16) befestigt ist.

10. Thermoformmaschine, wobei die Thermoformmaschine einen Spannrahmen (10) gemäß irgendeinem der bisherigen Ansprüche umfasst.

## Revendications

1. Cadre de fixation (10) pour machine de thermoformage, ledit cadre (10) définissant une fenêtre quadrangulaire (12) ayant des dimensions réglables et destinée à tenir la périphérie d'une feuille (14) d'un matériau à thermoformer, et comprenant :
- une structure de support (16) destinée à être connectée à un système de déplacement vertical de ladite machine de thermoformage ;
- une paire de longerons longitudinaux (22) montés de façon à être mobiles d'une manière guidée dans une direction transversale (Y) par rapport à ladite structure de support (16) ; et
- une paire de barres transversales (24) solidaires desdits longerons longitudinaux (22), et dont la distance relative définit la dimension longitudinale (x) de ladite fenêtre (12) ;
ledit cadre (10) étant **caractérisé en ce qu'**il comprend en outre une paire de barres longitudinales (26) également solidaires desdits longerons longitudinaux (22), et dont la distance relative définit la dimension longitudinale (y) de ladite fenêtre (12) ; dans lequel, sur la partie inférieure de chaque longeron longitudinal (22) sont montés de façon glissante dans la direction longitudinale :
d'une part, un premier élément de chariot (28) auquel est fixée une extrémité axiale (26a) d'une barre longitudinale associée (26), et qui est traversé par une barre transversale précédente (24) de manière à guider le glissement latéral de celui-ci sur ladite extrémité axiale (26a) de la barre longitudinale (26) ; et
d'autre part, un deuxième élément de chariot (30) sur lequel est fixée une extrémité (24a) d'une barre transversale associée (24), et qui est traversé par la barre longitudinale (26) associée audit premier élément de chariot (28) de manière à guider le glissement latéral de celui-ci sur ladite extrémité axiale (24a) de la barre transversale (24) ;
lesdits premier et deuxième éléments de chariot (28, 30) permettant le mouvement des barres transversales (24) dans la direction longitudinale (X).

2. Cadre selon la revendication 1, dans lequel chaque longeron longitudinal (22) a une première et une deuxième rainure longitudinale (32, 34) dans lesquelles lesdits premier et deuxième éléments de chariot (28, 30), respectivement, sont supportés de façon glissante.

3. Cadre selon la revendication 1 ou 2, dans lequel chaque barre transversale (24) et chaque barre longitudinale (26) ont respectivement une rainure de guidage transversale (42) et une rainure de guidage longitudinale (46) coopérant respectivement avec une première protubérance de guidage (40) et avec une deuxième protubérance de guidage (44) qui font saillie respectivement depuis le premier élément de chariot (28) et depuis le deuxième élément de chariot (30) traversés respectivement par ladite barre transversale (24) et par ladite barre longitudinale (26).

4. Cadre selon l'une quelconque des revendications précédentes, dans lequel chaque longeron longitudinal (22) comprend, entre les deux éléments de chariot (28, 30), une section intermédiaire (48) faisant saillie vers le bas et reposant contre la barre longitudinale (26) qui traverse le deuxième élément de chariot respectif (30).

5. Cadre selon l'une quelconque des revendications précédentes, dans lequel lesdits premier et deuxième éléments de chariot (28, 30) sont actionnés simultanément par un moyen d'actionnement (50) pour les rapprocher ou les éloigner l'un de l'autre.

6. Cadre selon la revendication 5, dans lequel ledit moyen d'actionnement comprend un axe fileté (50) qui est supporté à rotation par le longeron longitudinal (22) sur lequel sont montés lesdits premier et deuxième éléments de chariot (28, 30), et qui, sur ses côtés opposés, comporte un premier et un deuxième filetage de vis (52, 45) formés dans des directions opposées et coopérant respectivement avec une première et une deuxième vis femelle complémentaire, qui sont prévues respectivement dans lesdits premier et deuxième éléments de chariot (28, 30).

7. Cadre selon la revendication 6, dans lequel ledit axe fileté (50) est mis en rotation par un moyen formant moteur (60).

8. Cadre selon la revendication 7, dans lequel ledit moyen formant moteur comprend un moteur électrique (60).

9. Cadre selon la revendication 8, dans lequel ledit moyen formant moteur (60) est fixé à ladite structure de support (16).

10. Machine de thermoformage comprenant un cadre de fixation (10) selon l'une quelconque des revendications précédentes.
